# EUROPÄISCHE PATENTSCHRIFT

(11) **EP 1 963 153 B1**
(45) Veröffentlichungstag und Bekanntmachung des Hinweises auf die Patenterteilung: **17.11.2010**
(21) Anmeldenummer: 06830561.4
(22) Anmeldetag: 12.12.2006
(51) Int. Cl.: B60T 8/32, B62L 3/02, B60T 8/42, B60T 8/40

(54) **KRAFTRADBREMSANLAGE**
MOTORCYCLE BRAKE SYSTEM
SYSTEME DE FREINAGE D'UN MOTOCYCLE

(30) Priorität: 12.12.2005 DE 102005059659; 18.05.2006 DE 102006023305
(43) Veröffentlichungstag der Anmeldung: 03.09.2008
(73) Patentinhaber: Continental Teves AG & Co. oHG, 60488 Frankfurt (DE)
(72) Erfinder: ECKERT, Alfred, 55129 Mainz-Hechtsheim (DE); HOFFMANN, Oliver, 60486 Frankfurt am Main (DE)
(86) Internationale Anmeldenummer: PCT/EP2006/069613
(87) Internationale Veröffentlichungsnummer: WO 2007/068702

(56) Entgegenhaltungen:
- EP-A- 1 650 093
- EP-A2- 1 721 797
- WO-A-99/51477
- DE-A1- 10 327 571
- JP-A- 2000 071 963

## Beschreibung

Die Erfindung betrifft eine Kraftradbremsanlage nach dem Oberbegriff des Patentanspruchs 1.

Aus der JP 2000071963 A ist bereits eine derartige Kraftradbremsanlage bekannt. Die Bremsanlage weist einen hydraulisch betätigbaren Vorderrad- und Hinterradbremskreis auf, in denen gemeinsam als auch unabhängig voneinander über einen fuß- und handbetätigten Hauptbremszylinder Bremsdruck in den Radbremsen aufgebaut werden kann. Zur Bremsschlupfregelung sind im Vorderrad- als auch im Hinterradbremskreis elektromagnetisch aktivierbare Ein- und Auslassventile sowie eine von einem Elektromotor antreibbare zweikreisige Pumpe eingesetzt. Ferner sind außer den Ein- und Auslassventilen und der Pumpe zusätzlich elektrisch betätigbare Trenn- und Umschaltventile in den beiden Bremskreisen vorhanden, um bei manueller Betätigung eines der beiden Hauptbremszylinders auch Bremsdruck in dem nicht manuell betätigten Bremskreis elektrohydraulisch aufbauen zu können, wozu die Pumpe und das Trenn- und Umschaltventil im nicht manuell betätigten Bremskreis elektrisch aktiviert werden.

Ein Nachteil dieser Bremsanlage ist das Zurückwirken des Pumpendrucks auf den manuell betätigten Hauptbremszylinder, wodurch ein Pulsieren am Hand- oder Fußbremshebel des manuell betätigten Hauptbremszylinders spürbar ist.

Es ist daher die Aufgabe der vorliegenden Erfindung, eine Kraftradbremsanlage der angegebenen Art derart zu verbessern, dass mit möglichst einfachen und funktionssicheren Mitteln eine Rückwirkung des Pumpendrucks auf den hand- oder fußbetätigten Hauptbremszylinder sicher verhindert werden kann.

Diese Aufgabe wird für eine Kraftradbremsanlage der angegebenen Art mit den kennzeichnenden Merkmalen der unabhängigen Patentansprüche 1 und 6 gelöst.

Weitere Merkmale und Vorteile der Erfindung gehen aus den Unteransprüchen sowie aus der nachfolgenden Beschreibung eines Ausführungsbeispiels hervor.

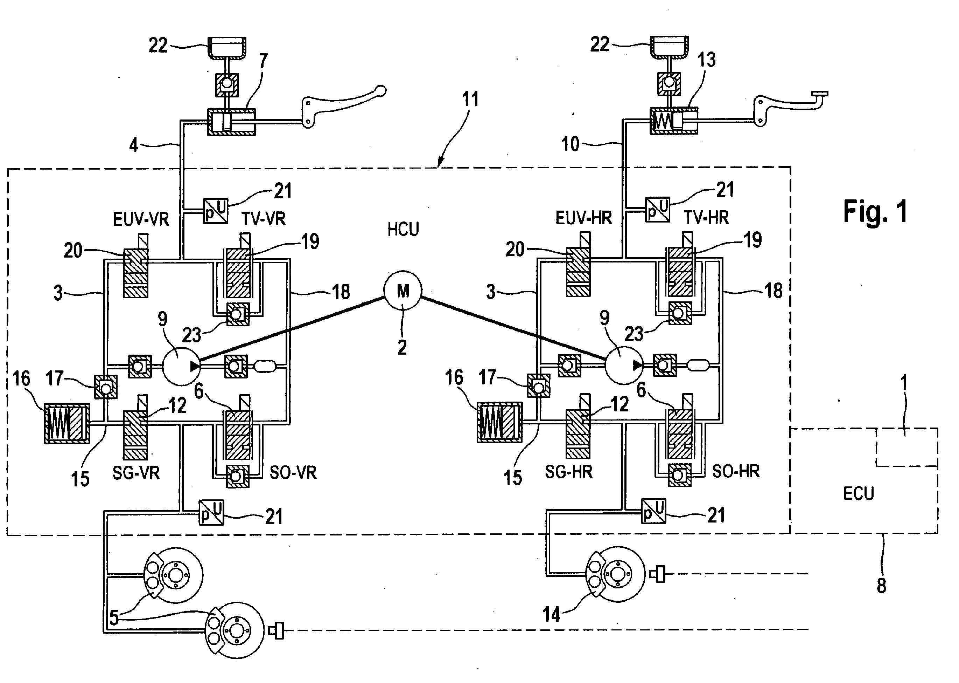

Die Figur 1 zeigt den Hydraulikschaltplan mit den erfindungswesentlichen Merkmalen für eine Kraftradbremsanlage in schematischer Darstellung. Die Bremsanlage besteht aus einem hydraulisch betätigbaren Vorderrad- und Hinterradbremskreis 4, 10, mit jeweils einem am Vorderradbremskreis 4 angeschlossenen, durch Handkraft betätigbaren Hauptbremszylinder 7 und mit einem fußkraftproportional betätigbaren Hauptbremszylinder 13 an der Hinterradbremse 14.

Zur Bremsschlupfregelung sind im Vorderrad- als auch Hinterradbremskreis 4, 10 elektromagnetisch betätigbare Ein- und Auslassventile 6, 12 angeordnet, wobei jeweils ein in Grundstellung geöffnete Einlassventil 6 in die Bremsleitung des Vorder- als auch des Hinterradbremskreises 4, 10 eingesetzt ist, welche den jeweils zugehörigen Hauptbremszylinder 7, 13 mit der Vorderrad- oder der Hinterradbremse 5, 14 über das in Grundstellung geöffnete Trennventil 19 verbindet. Das in Grundstellung geschlossene Auslassventil 12 ist jeweils in eine Rücklaufleitung 15 eines jeden Bremskreises eingesetzt, welche die Vorder- oder Hinterradbremse 5, 14 mit jeweils einem Niederdruckspeicher 16 und dem Saugpfad 3 einer zweikreisig aufgeteilten Pumpe 9 verbindet, die nach dem Rückförderprinzip arbeitet. Die Pumpe 9 steht druckseitig mit den Bremsleitungen 18 beider Bremskreise in Verbindung, sodass in einer Bremsschlupfregelphase eine bedarfsgerechte Rückförderung des jeweils von der Vorder- bzw. Hinterradbremse 5, 14 abgelassenen Bremsflüssigkeitsvolumens in die Bremsleitungen 18 beider Bremskreise gewährleistet ist. Die Pumpkolben der beiden Pumpenkreise werden gemeinsam von einem Elektromotor 2 angetrieben, sodass ohne die nachfolgend noch näher zu erläuternde erfindungsgemäße Schaltung des Trenn- und Umschaltventils 19, 20 mit dem Anlauf der Pumpe die Pulsation des Pumpendrucks ungehindert entweder auf den handbetätigten Bremshebel oder das fußbetätigte Bremspedal zurückwirken würde

Beide Bremskreise 4, 10 sind entsprechend ihrem schaltungstechnischen Aufbau gemeinsam als auch unabhängig voneinander betätigbar, mit der Besonderheit, dass beispielsweise bei einer manuellen Betätigung des am Vorderradbremskreis 4 angeschlossenen Hauptbremszylinder 7 nicht nur ein Bremsdruckaufbau in der Vorderradbremse 5, sondern gleichzeitig auch ein elektrohydraulischer Bremsdruckaufbau in der Hinterradbremse 14 erfolgt, indem der Elektromotor 2 die Pumpe 9 in Betrieb setzt, sobald infolge der im Hinterradbremskreis 10 elektrisch initiierten Offenstellung des Umschaltventils 20 die Pumpe 9 Druckmittel vom Hauptbremszylinder 13 entnimmt und zur Hinterradbremse 14 fördert, während das Trennventil 19 im Hinterradbremskreis 10 die Pumpendruckseite vom Hauptbremszylinder 13 trennt.

Das vorgenannten Betätigungsbeispiel lässt sich natürlich auch umkehren, indem abhängig von der manuellen Betätigung des an der Hinterradbremse 10 angeschlossenen Hauptbremszylinders 13 nach gleichem Schema eine elektrohydraulisch initiierte Bremsung an der Vorderradbremse 5 ausgelöst wird. Daraus folgt, dass bei Betätigung eines der beiden Hauptbremszylinder 7, 13 der jeweils vom Fahrer nicht betätigte Bremskreis quasi elektrohydraulisch fremdangesteuert durch die zweikreisige Pumpe 9 unter Druck gesetzt wird, sodass bei einer Einzelbetätigung eines der beiden Hauptbremszylinder immer beide Bremskreise aktiv zur Bremsverzögerung beitragen.

Zur Erfassung des vom Hauptbremszylinder 7 in den Vorderradbremskreis 4 eingesteuerten Drucks wird in der Regel ein Drucksensor 21 verwendet. Auch die Überwachung des in den Hinterradbremskreis manuell eingesteuerten Drucks erfolgt mittels eines in der Nähe des Hauptbremszylinders 13 angeordneten Drucksensors 21. Zur Analogregelung der Einlassventile 6 sind beide Bremskreise zusätzlich mit zwei den Radbremsdruck erfassende Drucksensoren 21 versehen.

Bei manueller Betätigung des Vorderradbremskreises 4 bildet der mittels des Drucksensors 21 im Vorderradbremskreis 4 erfasste Hauptbremszylinderdruck die Führungsgröße zur elektrischen Aktivierung der im Hinterrad- und Vorderradbremskreis 10, 4 wirksamen Pumpe 9, die im Zusammenwirken mit dem Ein- und Auslassventil 6, 12, dem Trenn- und Umschaltventil 19, 20 eine automatische Bremsdruckregelung im Hinterradbremskreis 10 gemäß einer im Steuergerät 8 abgelegten elektronischen Bremskraftverteilungskennlinie bewirkt, wenn ausschließlich der am Vorderradbremskreis 4 angeschlossene Hauptbremszylinder 7 betätigt wird.

Analog dazu gilt, dass bei ausschließlicher manueller Betätigung des Hinterradbremskreises 10 der am Hauptbremszylinder 13 des Hinterradbremskreises 4 angeordnete Drucksensor 21 die Führungsgröße zur elektrischen Aktivierung der im Vorderradbremskreis 10 eingesetzten Pumpe 9, des Ein-, Auslass-, Umschalt- und Trennventils bildet.

Zur Auswertung der Drucksensorsignale ist eine Logikschaltung im elektronischen Steuergerät 8 vorgesehen, in dem abhängig vom Auswerteergebnis der Drucksensorsignale mittels der elektrisch betätigbaren Pumpe 9 ein Hydraulikdruck erzeugt wird.

Das symbolisch dargestellte Steuergerät 8 bildet vorzugsweise ein integrales Bestandteil einer den Vorder- und Hinterradbremskreis 4, 10 aufweisenden Bremseinheit 11, die baulich als monolithischer Block ausgeführt ist. Das Steuergerät 8 ist in einer zweckmäßigen Ausführungsform zur elektrischen Kontaktierung auf die in der Bremseinheit 11 integrierten Ein- und Auslassventile 6, 11, Umschalt- und Trennventile 20, 19 aufgesteckt. Die Bremseinheit 11 lässt sich somit aufgrund der besonders kompakten Bauweise in Nähe einer Batterie an einem Kraftradrahmen befestigen.

Grundsätzlich gilt für eine schlupfgeregelte Bremsung:
1. Eine Blockierneigung des Vorder- bzw. des Hinterrades wird mittels Raddrehzahlsensoren und deren Signalauswertung im Steuergerät 8 sicher erkannt. Das im Vorderrad- bzw. im Hinterradbremskreis 4, 10 angeordnete Einlassventil 6 wird über das Steuergerät 8 elektromagnetisch geschlossen, um einen weiteren Druckaufbau im Vorderrad- bzw. Hinterradbremskreis 4, 10 zu unterbinden.
2. Sollte zur Reduzierung der Blockierneigung zusätzlich ein weiterer Druckabbau im Vorderrad- bzw. Hinterradbremskreis 4, 10 erforderlich sein, so wird dies durch das Öffnen des jeweils mit dem Niederdruckspeicher 16 verbindbaren, normalerweise stromlos geschlossenen Auslassventil 12 erreicht. Das Auslassventil 12 wird geschlossen, sobald die Radbeschleunigung wieder über ein bestimmtes Maß hinaus anwächst. In der Druckabbauphase bleibt das entsprechende Einlassventil 6 geschlossen, so dass sich der im Vorderrad- bzw. Hinterradbremskreis 4, 10 erzeugte Hauptbremszylinderdruck nicht auf den Vorderrad- bzw. Hinterradbremskreis 4, 10 fortpflanzen kann.
3. Wenn die ermittelten Schlupfwerte wieder einen Druckaufbau im Vorderrad- bzw. Hinterradbremskreis 4, 10 erlauben, wird das Einlassventil 6 entsprechend der Anforderung des im Steuergerät 8 integrierten Schlupfreglers zeitlich begrenzt geöffnet. Das für den Druckaufbau erforderliche Hydraulikvolumen wird von der Pumpe 9 zu Verfügung gestellt.

Unabhängig davon, welcher der beiden Hauptbremszylinder 7, 13 manuell betätigt wird, sieht die Erfindung vor, dass in dem Bremskreis, der über den zugehörigen Hauptbremszylinder 7, 13 manuell betätigt wird, zu Beginn des Pumpenlaufs das Umschaltventil 20 und/oder das Trennventil 19 eine Schaltstellung einnehmem, in der eine Rückwirkung des von der Pumpe 9 erzeugbaren Drucks auf den hand- oder fußkraftbetätigten Hauptbremszylinder 7, 13 verhindert wird. Folglich ist nicht nur im fremdansteuerbaren, elektrohydraulisch betätigten Bremskreis das Trennventil 19 geschlossen, sondern auch für einen vergleichsweise kurzen Zeitraum im korrespondierenden hand- oder fußbetätigten Bremskreis.

Daher nimmt im manuell (hand- oder fußkraft-) betätigten Bremskreis zu Beginn des Pumpenlaufs das Trennventil 19 entweder eine gedrosselte oder gar geschlossene Schaltstellung ein, wodurch eine Rückwirkung des von der Pumpe 9 erzeugten Drucks auf den hand- oder fußkraftbetätigten Hauptbremszylinder 7, 13 auf einfache Weise verhindert ist. Gleichzeitig verharrt im manuell betätigten Bremskreis auch das Auslassventil 12 und das Umschaltventil 20 in der geschlossenen Schaltstellung, sodass durch die Pumpe 9 allenfalls ein Leersaugen der Rücklaufleitung 15 erfolgt, in die stromabwärts der in der Regel entleerte Niederdruckspeicher 16 und ein Druckrückhalteventil 17 eingesetzt ist.

Daher verharrt das Trennventil 19 des hand- oder fußkraftbetätigten Bremskreises während des Pumpenlaufs für eine nur relativ kurze Zeitdauer in der gedrosselten oder geschlossenen Schaltstellung. Diese relativ kurze Zeitdauer entspricht einer geringen Anzahl von Förderhüben, bzw. einer entsprechend geringen Anlaufdrehzahl der Pumpe 9, weshalb zur Erfassung der Förderhübe oder der Anlaufdrehzahl im Steuergerät 8 eine Messeinrichtung 1 vorgesehen ist, anhand deren Messsignale das Trennventil 19 für einen definierten Zeitraum nur relativ kurz durch das Steuergerät 8 elektromagnetisch erregt in seiner gedrosselten oder geschlossenen Schaltstellung verharrt.

Die Anzahl der Förderhübe, bei denen das Trennventil 19 im manuell betätigten Bremskreis aus Komfortgründen seine gedrosselte oder geschlossene Schaltstellung einnimmt, liegt in der Größenordnung zwischen 2 und 10 Kolbenpumpenhübe.

Somit verharrt das Trennventil 19 des hand- oder fußkraftbetätigten Bremskreises mit dem Anlauf der Pumpe 9 in der Regel für einen nahezu konstanten zeitlichen Mittelwert in seiner gedrosselten oder geschlossenen Schaltstellung, wobei der zeitliche Mittelwert durch die erforderliche Zeitdauer der Entleerung des zwischen der Pumpe 9, dem geschlossenen Umschaltventil 20 und dem Auslassventil 12 angeordneten Pumpensaugpfad 3 bestimmt ist. Zur Einhaltung des konstanten zeitlichen Mittelwerts, bei dem das Trennventil 19 in seiner gedrosselten oder geschlossenen Schaltstellung verharren muss, kann mittels eines im Steuergerät 8 integrierten Zeitschaltgliedes alternativ zur zitierten Messeinrichtung 1 realisiert werden.

Um eine Rückwirkung des von der Pumpe 9 erzeugten Drucks auf den hand- oder fußkraftbetätigten Hauptbremszylinder 7, 13 zu Beginn einer Abbremsung zu verhindert, wird nunmehr alternativ zur Sperr- oder Drosselstellung des Trennventils 19 vorgeschlagen, die Pumpensaugseite mit der Pumpendruckseite über das Umschaltventil 20 und das Trennventil 19 kurz zu schließen, wozu sowohl das Umschaltventil 20 als auch das Trennventil 19 ihre geöffnete Schaltstellung einnehmen.

Das bestehende Problem, zu Beginn einer Bremsbetätigung die Rückwirkung des Pumpendrucks auf den betätigten Hand- oder Fußbremshebel zu verhindern, lässt sich somit zu Beginn des Pumpenanlaufs entweder mittels eines Pumpenkurzschlusses oder alleinig durch Drosseln bzw. Absperren des Trennventils 19 wirkungsvoll verhindern.

Wie aus Figur ersichtlich ist, sind in jedem Bremskreis das in Grundstellung geöffnete Trennventil 19, das in Grundstellung geschlossene Umschaltventil 20, das in Grundstellung geöffnete Einlassventil 6 und das in Grundstellung geschlossene Auslassventil 12 als elektrisch betätigbares 2/2-Wegeventil ausgeführt, die auf einfachste Weise jeweils durch eine Feder in ihrer abgebildeten Grundstellung verharren. Ferner ist parallel zu jedem der beiden Trennventile 19 ein in Richtung der Radbremse 5, 14 öffnendes Rückschlagventil 23 angeordnet, wodurch unabhängig von der Trennventilstellung jederzeit über den angeschlossenen Hauptbremszylinder 7, 13 eine manuelle Bremsdruckeinspeisung erfolgen kann, und zwar unabhängig davon, ob nun in einem der beiden Bremskreise ein elektrohydraulisch gesteuerter Bremsung erfolgt.

### Bezugszeichenliste

- 1: Messeinrichtung
- 2: Elektromotor
- 3: Pumpensaugpfad
- 4: Vorderradbremskreis
- 5: Vorderradbremse
- 6: Einlassventil
- 7: Hauptbremszylinder
- 8: Steuergerät
- 9: Pumpe
- 10: Hinterradbremskreis
- 11: Bremseinheit
- 12: Auslassventil
- 13: Hauptbremszylinder
- 14: Hinterradbremse
- 15: Rücklaufleitung
- 16: Niederdruckspeicher
- 17: Druckrückhalteventil
- 18: Bremsleitung
- 19: Trennventil
- 20: Umschaltventil
- 21: Drucksensor
- 22: Ausgleichsbehälter
- 23: Rückschlagventil

## Patentansprüche

1. Kraftradbremsanlage mit einem ersten hand- oder fußkraftbetätigten Hauptbremszylinder (7) zur hydraulischen Betätigung eines ersten Bremskreises und mit einem zweiten hand- oder fußkraftbetätigten Hauptbremszylinder (13) zur hydraulischen Betätigung eines zweiten Bremskreises, mit einem zur Bremsschlupfregelung in jeder Radbremse eines jeden Bremskreises vorgesehenen Ein- und Auslassventils (6, 12), mit einem in jedem der beiden Bremskreise angeordneten Niederdruckspeicher (16), der jeweils stromabwärts des Auslassventils (12) an einer Rücklaufleitung (15) angeschlossen ist, die in jedem Bremskreis zur Saugseite einer Pumpe (9) führt, deren Pumpendruckseite an dem ersten und zweiten Bremskreis angeschlossen ist, sowie mit einem Trennventil (19) in jedem Bremskreis, das in der Offenstellung jeweils den zugehörigen Hauptbremszylinder (7, 13) mit der Pumpendruckseite verbindet, mit einem Umschaltventil (20) in jedem Bremskreis, das in seiner Offenstellung jeweils den zugehörigen Hauptbremszylinder (7, 13) mit der Saugseite der Pumpe (9) verbindet, **dadurch gekennzeichnet, dass** zu Beginn des Pumpenlaufs das Umschaltventil (20) und/oder das Trennventil (19) in einem der beiden Bremskreise eine Schaltstellung einnehmen, in der eine Rückwirkung des von der Pumpe (9) erzeugbaren Drucks auf den hand- oder fußkraftbetätigten Hauptbremszylinder (7, 13) verhindert ist, wobei im hand- oder fußkraftbetätigten Bremskreis zu Beginn des Pumpenlaufs das Trennventil (19) eine gedrosselte oder geschlossene Schaltstellung einnimmt, wodurch eine Rückwirkung des von der Pumpe (9) erzeugten Drucks auf den hand- oder fußkraftbetätigten Hauptbremszylinder (7, 13) nicht mehr spürbar ist, und während des Pumpenlaufs im hand- oder fußkraftbetätigten Bremskreis das Umschaltventil (20) eine geschlossene Schaltstellung einnimmt.

2. Kraftradbremsanlage nach Anspruch 1, **dadurch gekennzeichnet, dass** das Trennventil (19) des hand- oder fußkraftbetätigten Bremskreises abhängig von einer definierten Anzahl von Förderhüben oder einer definierten Anlaufdrehzahl der Pumpe (9) in seiner gedrosselten oder geschlossenen Schaltstellung verharrt, wobei zur Erfassung der Förderhübe oder der Anlaufdrehzahl eine Messeinrichtung (1) vorgesehen ist, anhand deren Messsignale das Trennventil (19) in seiner gedrosselten oder geschlossenen Schaltstellung verharrt.

3. Kraftradbremsanlage nach Anspruch 2, **dadurch gekennzeichnet, dass** die Anzahl der Förderhübe, bei denen das Trennventil (19) seine gedrosselte oder geschlossene Schaltstellung einnimmt, zwischen 2 und 10 Kolbenhübe der Pumpe (9) beträgt.

4. Kraftradbremsanlage nach Anspruch 1, **dadurch gekennzeichnet, dass** das Trennventil (19) des hand- oder fußkraftbetätigten Bremskreises mit dem Anlauf der Pumpe (9) für einen konstanten zeitlichen Mittelwert in seiner gedrosselten oder geschlossenen Schaltstellung verharrt, wobei der zeitliche Mittelwert durch die durchschnittlich erforderliche Zeitdauer der Entleerung des zwischen der Pumpe (9), dem geschlossenen Umschaltventil (20) und dem Auslassventil (12) angeordneten Pumpensaugpfad (3) bestimmt ist.

5. Kraftradbremsanlage nach einem der vorangegangenen Ansprüche, **dadurch gekennzeichnet, dass** das Trennventil (19) abhängig vom Signal eines Zeitschaltglieds für eine kurze konstante Zeitdauer elektrisch in seiner gedrosselten oder geschlossenen Schaltstellung geschaltet ist.

6. Kraftradbremsanlage mit einem ersten hand- oder fußkraftbetätigten Hauptbremszylinder (7) zur hydraulischen Betätigung eines ersten Bremskreises und mit einem zweiten hand- oder fußkraftbetätigten Hauptbremszylinder (13) zur hydraulischen Betätigung eines zweiten Bremskreises, mit einem zur Bremsschlupfregelung in jeder Radbremse eines jeden Bremskreises vorgesehenen Ein- und Auslassventils (6, 12), mit einem in jedem der beiden Bremskreise angeordneten Niederdruckspeicher (16), der jeweils stromabwärts des Auslassventils (12) an einer Rücklaufleitung (15) angeschlossen ist, die in jedem Bremskreis zur Saugseite einer Pumpe (9) führt, deren Pumpendruckseite an dem ersten und zweiten Bremskreis angeschlossen ist, sowie mit einem Trennventil (19) in jedem Bremskreis, das in der Offenstellung jeweils den zugehörigen Hauptbremszylinder (7, 13) mit der Pumpendruckseite verbindet, mit einem Umschaltventil (20) in jedem Bremskreis, das in seiner Offenstellung jeweils den zugehörigen Hauptbremszylinder (7, 13) mit der Saugseite der Pumpe (9) verbindet, **dadurch gekennzeichnet, dass** zu Beginn des Pumpenlaufs das Umschaltventil (20) und/oder das Trennventil (19) in einem der beiden Bremskreise eine Schaltstellung einnehmen, in der eine Rückwirkung des von der Pumpe (9) erzeugbaren Drucks auf den hand- oder fußkraftbetätigten Hauptbremszylinder (7, 13) verhindert ist, wobei zu Beginn des Pumpenlaufs die Pumpensaugseite mit der Pumpendruckseite verbunden ist, wobei zur Verbindung der Pumpensaugseite mit der Pumpendruckseite das Umschaltventil (20) und das Trennventil (19) gleichzeitig eine geöffnete Schaltstellung einnehmen, wodurch ein kurzgeschlossener, für den manuell betätigten Hauptbremszylinder (7, 13) rückwirkungsfreier Pumpenumlauf hergestellt ist.

## Claims

1. Motorcycle brake system having a first hand-actuated or foot-actuated master brake cylinder (7) for hydraulically actuating a first brake circuit and having a second hand-actuated or foot-actuated master brake cylinder (13) for hydraulically actuating a second brake circuit, having an inlet valve (6) and outlet valve (12) provided for brake slip regulation in each wheel brake of each brake circuit, having a low pressure accumulator (16) which is arranged in each of the two brake circuits and which is connected in each case downstream of the outlet valve (12) to a return line (15) which leads, in each brake circuit, to the suction side of a pump (9) whose pump pressure side is connected to the first and second brake circuits, and having in each brake circuit an isolating valve (19) which, in the open position, connects in each case the associated master brake cylinder (7, 13) to the pump pressure side, having in each brake circuit a switchover valve (20) which, in its open position, connects in each case the associated master brake cylinder (7, 13) to the suction side of the pump (9), **characterized in that**, at the start of pump running, the switchover valve (20) and/or the isolating valve (19) in one of the two brake circuits assume a switching position in which a feedback of the pressure which can be generated by the pump (9) to the hand-actuated or foot-actuated master brake cylinder (7, 13) is prevented, wherein in the hand-operated or foot-operated brake circuit, at the start of pump running, the isolating valve (19) assumes a throttled or closed switching position, as a result of which a feedback of the pressure generated by the pump (9) to the hand-actuated or foot-actuated master brake cylinder (7, 13) is no longer perceptible, and during pump running, in the hand-actuated or foot-actuated brake circuit, the switchover valve (20) assumes a closed switching position.

2. Motorcycle brake system according to Claim 1, **characterized in that** the isolating valve (19) of the hand-actuated or foot-actuated brake circuit pauses in its throttled or closed switching position as a function of a defined number of feed strokes or of a defined starting rotational speed of the pump (9), with a measuring device (1) being provided to detect the feed strokes or the starting rotational speed, on the basis of the measurement signals of which measuring device the isolating valve (19) pauses in its throttled or closed switching position.

3. Motorcycle brake system according to Claim 2, **characterized in that** the number of feed strokes during which the isolating valve (19) assumes its throttled or closed switching position is between 2 and 10 piston strokes of the pump (9).

4. Motorcycle brake system according to Claim 1, **characterized in that** the isolating valve (19) of the hand-actuated or foot-actuated brake circuit pauses in its throttled or closed switching position for a constant time mean value upon the starting of the pump (9), with the time mean value being determined by the average required time duration for the emptying of the pump suction path (3) arranged between the pump (9), the closed switchover valve (20) and the outlet valve (12).

5. Motorcycle brake system according to one of the preceding claims, **characterized in that** the isolating valve (19) is switched electrically into its throttled or closed switching position for a short constant time duration as a function of the signal of a timing element.

6. Motorcycle brake system having a first hand-actuated or foot-actuated master brake cylinder (7) for hydraulically actuating a first brake circuit and having a second hand-actuated or foot-actuated master brake cylinder (13) for hydraulically actuating a second brake circuit, having an inlet valve (6) and outlet valve (12) provided for brake slip regulation in each wheel brake of each brake circuit, having a low pressure accumulator (16) which is arranged in each of the two brake circuits and which is connected in each case downstream of the outlet valve (12) to a return line (15) which leads, in each brake circuit, to the suction side of a pump (9) whose pump pressure side is connected to the first and second brake circuits, and having in each brake circuit an isolating valve (19) which, in the open position, connects in each case the associated master brake cylinder (7, 13) to the pump pressure side, having in each brake circuit a switchover valve (20) which, in its open position, connects in each case the associated master brake cylinder (7, 13) to the suction side of the pump (9), **characterized in that**, at the start of pump running, the switchover valve (20) and/or the isolating valve (19) in one of the two brake circuits assume a switching position in which a feedback of the pressure which can be generated by the pump (9) to the hand-actuated or foot-actuated master brake cylinder (7, 13) is prevented, wherein, at the start of pump running, the pump suction side is connected to the pump pressure side, wherein to connect the pump suction side to the pump pressure side, the switchover valve (20) and the isolating valve (19) simultaneously assume an open switching position, as a result of which a shorted pump circuit is produced which is free from feedback for the manually actuated master brake cylinder (7, 13).

## Revendications

1. Installation de freinage assisté de roues, qui présente :
un premier cylindre principal (7) de frein actionné à la force de la main ou du pied et qui actionne hydrauliquement un premier circuit de freinage et un deuxième cylindre principal (13) actionné sous la force de la main ou du pied et qui actionne hydrauliquement un deuxième circuit de freinage,
une soupape d'admission et une soupape d'échappement (6, 12) prévues pour la régulation du patinage au freinage dans chaque frein de roue de chaque circuit de freinage,
un réservoir (16) à basse pression disposé dans chacun des deux circuits de freinage, raccordé en aval de la soupape d'échappement (12) à un conduit (15) de renvoi qui conduit dans chaque circuit de freinage au côté d'aspiration d'une pompe (9) dont le côté de refoulement est raccordé respectivement au premier et au deuxième circuit de freinage, et
dans chaque circuit de freinage, une soupape de séparation (19) qui en position ouverte relie au côté de refoulement de la pompe le cylindre principal de frein (7, 13) associé et dans chaque circuit de freinage, une soupape d'inversion (20) qui en position ouverte relie au côté d'aspiration de la pompe (9) le cylindre principal de frein (7, 13) associé,
**caractérisée en ce que**
au début du fonctionnement de la pompe, la soupape d'inversion (20) et/ou la soupape de séparation (19) prennent dans l'un des deux circuits de freinage une position de raccordement dans laquelle la pression créée par la pompe (9) est empêchée de rétroagir sur le cylindre principal de frein (7, 13) actionné par la force de la main ou du pied,
**en ce qu'**au début du fonctionnement de la pompe, la soupape de séparation (19) prend dans le circuit de freinage actionné à la force de la main ou du pied une position de raccordement étranglée ou fermée qui empêche de détecter la rétroaction de la pression créée par la pompe (9) sur le cylindre principal de frein (7, 13) actionné à la force de la main ou du pied, et
**en ce que** pendant le fonctionnement de la pompe, la soupape d'inversion (20) prend une position de raccordement fermée dans le circuit de freinage actionné à la force de la main ou du pied.

2. Installation de freinage assisté de roues selon la revendication 1, **caractérisée en ce que** dans sa position de raccordement étranglée ou fermée, la soupape de séparation (19) du circuit de freinage actionné à la force de la main ou du pied se bloque en fonction d'un nombre défini de courses de pompage ou une vitesse de rotation définie de fonctionnement de la pompe (9) et **en ce qu'**un dispositif de mesure (1) dont les signaux de mesure bloquent la soupape de séparation (19) dans sa position de raccordement étranglée ou fermée est prévu pour détecter les courses de pompage ou la vitesse de rotation en fonctionnement.

3. Installation de freinage assisté de roues selon la revendication 2, **caractérisée en ce que** le nombre des courses de pompage auxquelles la soupape de séparation (19) prend sa position de raccordement étranglée ou fermée est compris entre 2 et 10 courses du piston de la pompe (9).

4. Installation de freinage assisté de roues selon la revendication 1, **caractérisée en ce que** lors du démarrage de la pompe (9), la soupape de séparation (19) du circuit de freinage actionné à la force de la main ou du pied se bloque dans sa position de raccordement étranglée ou fermée à une valeur moyenne temporelle constante et **en ce que** la valeur temporelle moyenne est définie par la durée en moyenne nécessaire pour vider le parcours d'aspiration (3) de la pompe situé entre la pompe (9), la soupape d'inversion (20) fermée et la soupape d'échappement (12).

5. Installation de freinage assisté de roues selon l'une des revendications précédentes, **caractérisée en ce que** la soupape de séparation (19) se commute électriquement dans sa position de raccordement étranglée ou fermée en fonction du signal d'un organe de commutation temporisé à courte constante de temps.

6. Installation de freinage assisté de roues, qui présente :
un premier cylindre principal (7) de frein actionné à la force de la main ou du pied et qui actionne hydrauliquement un premier circuit de freinage et un deuxième cylindre principal (13) actionné sous la force de la main ou du pied et qui actionne hydrauliquement un deuxième circuit de freinage,
une soupape d'admission et une soupape d'échappement (6, 12) prévues pour la régulation du patinage au freinage dans chaque frein de roue de chaque circuit de freinage,
un réservoir (16) à basse pression disposé dans chacun des deux circuits de freinage, raccordé en aval de la soupape d'échappement (12) à un conduit (15) de renvoi qui conduit dans chaque circuit de freinage au côté d'aspiration d'une pompe (9) dont le côté de refoulement est raccordé respectivement au premier et au deuxième circuit de freinage, et
dans chaque circuit de freinage, une soupape de séparation (19) qui en position ouverte relie au côté de refoulement de la pompe le cylindre principal de frein (7, 13) associé et dans chaque circuit de freinage, une soupape d'inversion (20) qui en position ouverte relie au côté d'aspiration de la pompe (9) le cylindre principal de frein (7, 13) associé,
**caractérisée en ce que**
au début du fonctionnement de la pompe, la soupape d'inversion (20) et/ou la soupape de séparation (19) prennent dans l'un des deux circuits de freinage une position de raccordement dans laquelle la pression créée par la pompe (9) est empêchée de rétroagir sur le cylindre principal de frein (7, 13) actionné par la force de la main ou du pied et
**en ce qu'**au début du fonctionnement de la pompe, le côté d'aspiration de la pompe est relié au côté de refoulement de la pompe, et pour relier le côté d'aspiration de la pompe au côté de refoulement de la pompe, la soupape d'inversion (20) et la soupape de séparation (19) prennent ensemble une position de raccordement ouverte, ce qui établit un circuit de pompe en court-circuit, sans rétroaction sur le cylindre principal de freinage (7, 13) actionné à la main.
